## Europäisches Patentamt
## European Patent Office
## Office européen des brevets

(19)

(11) Veröffentlichungsnummer: **0 160 827**
**B1**

(12) # EUROPÄISCHE PATENTSCHRIFT

(45) Veröffentlichungstag der Patentschrift:
**10.06.87**

(21) Anmeldenummer: **85103679.8**

(22) Anmeldetag: **27.03.85**

(51) Int. Cl.⁴: **F 16 C 37/00**

(54) **Gleitlagergehäuse.**

(30) Priorität: **17.04.84 DE 3414476**

(43) Veröffentlichungstag der Anmeldung:
**13.11.85 Patentblatt 85/46**

(45) Bekanntmachung des Hinweises auf die Patenterteilung:
**10.06.87 Patentblatt 87/24**

(84) Benannte Vertragsstaaten:
**AT FR GB IT SE**

(56) Entgegenhaltungen:
**DE-A-1 400 330**
**DE-A-2 502 805**
**US-A-1 715 749**

(73) Patentinhaber: **GLYCO- Maschinenbau GmbH,
Stauderstrasse 83- 89, D-4300 Essen 12 (DE)**

(72) Erfinder: **Gerling, Paul, Dipl.- Ing., Hafenstrasse 18,
D-4200 Oberhausen (DE)**

(74) Vertreter: **Andrejewski, Walter, Patentanwälte
Andrejewski, Honke & Partner Postfach 10 02
54 Theaterplatz 3, D-4300 Essen 1 (DE)**

EP 0 160 827 B1

LIBER, STOCKHOLM 1987

## Beschreibung

Die Erfindung bezieht sich gattungsgemäß auf ein Gleitlagergehäuse nach DIN 31 690, - mit Gehäuseunterteil, Gehäuseoberteil und mit Kühlrippen an beiden Gehäuseteilen, wobei Sie Gehäuseunterteilkühlrippen zumindest an einer Gehäusefrontseite und vertikal angeordnet sind, wobei sie Gehäuseoberteilkühlrippen frontseitig unter Aussparung ser Wellendurchführung sowie des Teilungsfugenbereiches an die Wellendurchführung bzw. an den Teilungsfugenbereich herangeführten Gehäuseunterteilkühlrippen fortsetzen sowie außerdem auf ser Oberseite des Gehäuseoberteils angeordnet sins. Solche Gleitlagergehäuse können im Rahmen der Erfindung sowohl als Stehgleitlagergehäuse als auch als Flanschgleitlagergehäuse ausgeführt sein. - Im Rahmen ser Erfinsung werden aus terminologischen Gründen sowohl die Gehäusefrontseite, die im montierten Zustand des Gleitlagers freiliegt, als auch die einer zugeordneten Maschine zugewandte Gehäuserückseite als Gehäusefrontseite bezeichnet. Zumindest an einer Gehäusefrontseite meint, daß die freie sichtbare Gehäusefrontseite mit Gehäuseunterteilkühlrippen bzw. mit Gehäuseoberteilkühlrippen ausgerüstet ist, obwohl regelmäßig beide Gehäusefrontseiten entsprechend eingerichtet sind. Es versteht sich, daß bei einem derartigen Gleitlagergehäuse die Kühlrippen nach den entsprechenden Gesetzen der Thermodynamik, insbesondere also der Wärmeabfuhr, ausgelegt und angeordnet sind. Unter anderem erfolgt die Auslegung nach der Regel, daß das Produkt aus einem für die konstruktive Gestaltung typischen mittleren Wärmeübergangskoeffizienten und der gesamten für den Wärmeübergang, einschließlich der Kühlrippen zur Verfügung stehenden Oberfläche ein Maximum ist. Es versteht sich fernerhin, daß für den Einsatz und für die Manipulation erforderliche Hilfsbauteile, wie Ringschrauben, Tragaugen, Stöpsel u. dgl., die Kühlrippen unterbrechen.

Bei der aus DIN 31 690 bekannten gattungsgemäßen Ausführungsform eines Gleitlagergehäuses fehlen die Kühlrippen am Gehäuseoberteil. In der Praxis ist bei derartigen Gleitlagergehäusen jedoch auch das Gehäuseoberteil, wie angegeben, mit Kühlrippen versehen. Bei der bekannten Ausführungsform laufen die Kühlrippen über die gesamte Höhe des Gehäuseunterteils bis zum Bereich der Wellendurchführung bzw. bis zum Teilungsfugenbereich. Eine Aufteilung in Rippenregister findet nicht statt. Die Gehäuseoberteilkühlrippen setzen in der beschriebenen Weise die Gehäuseunterteilkühlrippen fort und sind ebenfalls in Register aufgeteilt. Die bekannten Gleitlagergehäuse haben sich bewährt. Sie sind jedoch in bezug auf die Wärmeabführung verbesserungsfähig, obgleich man die bei der bekannten Ausführungsform erreichten Werte der Wärmeabfuhr seit langem als gegeben hingenommen hat. Die erreichte Wärmeabfuhr bestimmt auch die Temperatur und damit die Standzeit der Lagerschalen, weil die Reibung im Gleitlager einen Wärmestrom erzeugt, der für einen vorgegebenen Lagerbelastungsfall einen bestimmten Wert aufweist und der über die Wärmeabfuhr dahingehend beherrscht werden muß, daß die Lagerschalen zu hohe Temperaturen nicht aufnehmen. Anders ausgedrückt bestimmt die erreichte Wärmeabfuhr auch die Belastbarkeit eines Gleitlagers nach DIN 31 690.

Der Erfindung liegt die Aufgabe zugrunde, bei einem gattungsgemäßen Gleitlagergehäuse die Wärmeabfuhr zu erhöhen, ohne im übrigen die Vorschriften von DIN 31 690 zu verlassen, sowie durch die Erhöhung der Wärmeabfuhr auch die Standzeit der Lagerschalen zu erhöhen.

Zur Lösung dieser Aufgabe lehrt die Erfindung, daß die Gehäuseunterteilkühlrippen in zumindest zwei horizontalen oder kreisbogenförmigen Rippenreihen übereinander angeordnet sind, die gleiche Rippenteilung aufweisen, und daß die Rippenreihen der Gehäuseunterteilkühlrippen zu gestaffelten Rippenregistern zusammengefaßt sowie gegeneinander versetzt sind. In Kombination dazu sind nach bevorzugter Ausführungsform der Erfindung auch die Gehäuseoberteilkühlrippen in Rippenregister aufgeteilt. Dazu lehrt die Erfindung im einzelnen, daß die Gehäuseoberteilkühlrippen an zumindest einer Frontseite ein frontseitiges Rippenregister und außerdem ein oberseitiges Rippenregister aus Rippenreihen bilden, die beide die gleiche Rippenteilung aufweisen, und daß die Gehäuseoberteilkühlrippen des oberseitigen Rippenregisters orthogonal zu den Gehäuseoberteilkühlrippen des frontseitigen Rippenregisters verlaufen. - Die Erfindung geht von der Erkenntnis aus, daß bei dem gattungsgemäßen Gleitlagergehäuse nach DIN 31 690 die verhältnismäßig langen Rippen des Gehäuseunterteils geteilt werden können. Hier entstehen zwei oder mehr als zwei gestaffelte Rippenregister, die versetzt angeordnet sind. Die Versetzung erfolgt vorzugsweise um das halbe Teilungsmaß. Sie kann aber auch lediglich ein Drittel des Teilungsmaßes ausmachen. Der Guß des Gehäuseunterteils wird dadurch nur wenig aufwendiger, man erreicht jedoch überraschenderweise eine Verbesserung des Wärmeübergangskoeffizienten an den Rippen um etwa 15%. Für das Gehäuseoberteil wird in Kombination dazu zum Zwecke der Ausnutzung des maximalen Berippungsvolumens ebenfalls eine Aufteilung in Rippenregister vorgeschlagen, und zwar vorzugsweise in der angegebenen Kombination von gleichsam radialen und axialen Rippen. Handelt es sich um ein Gleitlagergehäuse der Ausführungsform mit Anschlußdeckel vor der freiliegenden frontseitigen Wellendurchführung, so empfiehlt die Erfindung, daß auch der Abschlußdeckel vertikale Abschlußdeckelkühlrippen aufweist, die in horizontale Rippenreihen aufgeteilt und zu gestaffelten Rippenregistern zusammengefaßt sowie in der beschriebenen Weise gegeneinander versetzt angeordnet sein können. Aber auch wenn der Abschlußdeckel mit über die gesamte Abschlußdeckelhöhe durchlaufenden Abschlußdeckelkühlrippen versehen wird, wird eine beachtliche Verbesserung der Wärmeabfuhr erreicht.

Gattungsgemäße Gleitlagergehäuse können nach DIN 31 690 in verschiedenen Baugrößen hergestellt werden. Überraschenderweise kommt man für einen weiten Bereich unterschiedlicher Baugrößen zu einer beachtlichen Verbesserung der Wärmeabfuhr bei gleicher Bemessung der Kühlrippen. Dazu lehrt die Erfindung konkret, daß in der Ausführungsform für Wellendurchmesser zwischen 80 bis 1000 mm alle Rippenregister die gleiche Rippenteilung, die gleiche Rippenhöhe sowie die gleiche Rippendicke aufweisen, und zwar mit einem Teilungsmaß von etwa 15 mm, einer Rippenhöhe zwischen 15 und 50 mm, vorzugsweise zwischen 20 und 25 mm, und einer Rippendicke von etwa 4 mm, - was einem freien Zwischenraum zwischen benachbarten Kühlrippen von etwa 10 mm entspricht.

Die erreichten Vorteile sind darin zu sehen, daß bei dem erfindungsgemäßen Gleitlagergehäuse die Wärmeabfuhr gegenüber einer sonst übereinstimmenden gattungsgemäßen Ausführungsform beachtlich, nämlich um etwa 50 % erhöht ist, wenn man gleiche Temperaturdifferenz zwischen Gehäuse und Umgebung annimmt und wenn man die Wärmeabfuhr für den kritischsten Fall der freien Konvektion betrachtet. Das bedeutet, daß bei gleicher Abfuhr eine um etwa 30 % geringere Temperaturdifferenz zwischen Gehäuseoberfläche und Umgebung erreicht wird, woraus eine beachtliche Erhöhung auch der Standzeit der Lagerschalen erreicht wird oder, anders ausgedrückt, ein Gleitlager nach DIN 31 690 vorgegebener Baugröße beachtlich höher belastet werden kann.

Im folgenden wird die Erfindung anhand einer lediglich ein Ausführungsbeispiel darstellenden Zeichnung für ein nach der Erfindung ausgeführtes Stehgleitlager entsprechend DIN 31 690 ausführlicher erläutert. Es zeigen:

Fig. 1 eine Frontansicht eines erfindungsgemäßen Stehgleitlagergehäuses, ausschnittsweise,

Fig. 2 entsprechend der Fig. 1 eine andere Ausführungsform,

Fig. 3 eine Draufsicht auf ein erfindungsgemäßes Stehgleitlagergehäuse.

Das in den Figuren dargestellte Stehgleitlagergehäuse ist für Stehgleitlager nach DIN 31 690 bestimmt. Zum grundsätzlichen Aufbau gehören

ein Gehäuseunterteil 1 mit Gehäusefuß 2 und ein Gehäuseoberteil 3.

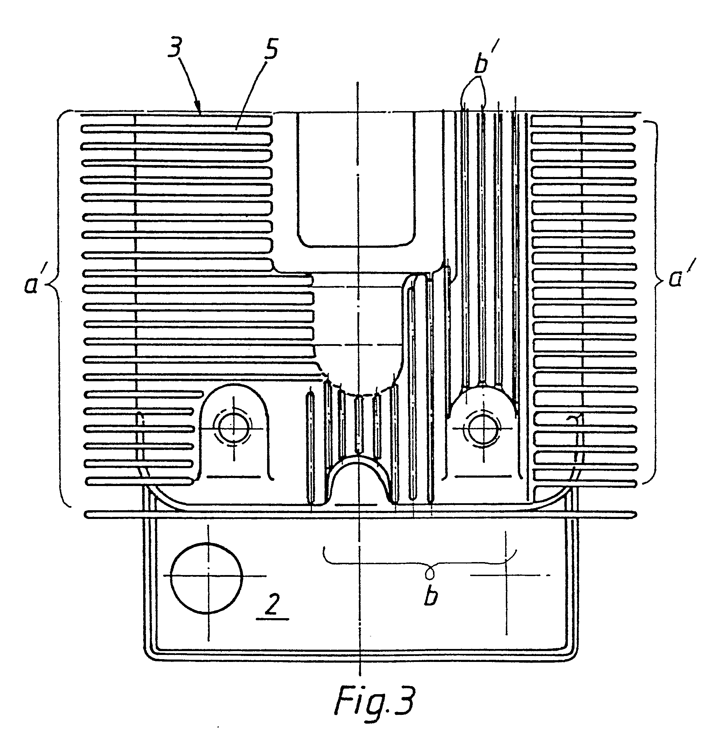

An beiden Gehäuseteilen 1, 3 befinden sich angegossene Kühlrippen 4, 5. Die Gehäuseunterteilkühlrippen 4 sind an der dargestellten Gehäusefrontseite vertikal angeordnet. Im allgemeinen sind sie so auch an der gegenüberliegenden Gehäusefrontseite, die auch als Gehäuserückseite bezeichnet werden kann, angeordnet, Die Anordnung ist so getroffen, daß die Gehäuseoberteilkühlrippen 5 frontseitig unter Aussparung der Wellendurchführung 6 sowie des Teilungsfugenbereiches 7, die an die Wellendurchführung bzw. an den Teilungsfugenbereich entsprechend herangeführten Gehäuseunterteilkühlrippen 4 fortsetzen. Außerdem sind Gehäuseoberteilkühlrippen 5 auf der Oberseite des Gehäuseoberteils 3 angeordnet, wozu auf Fig. 3 verwiesen wird.

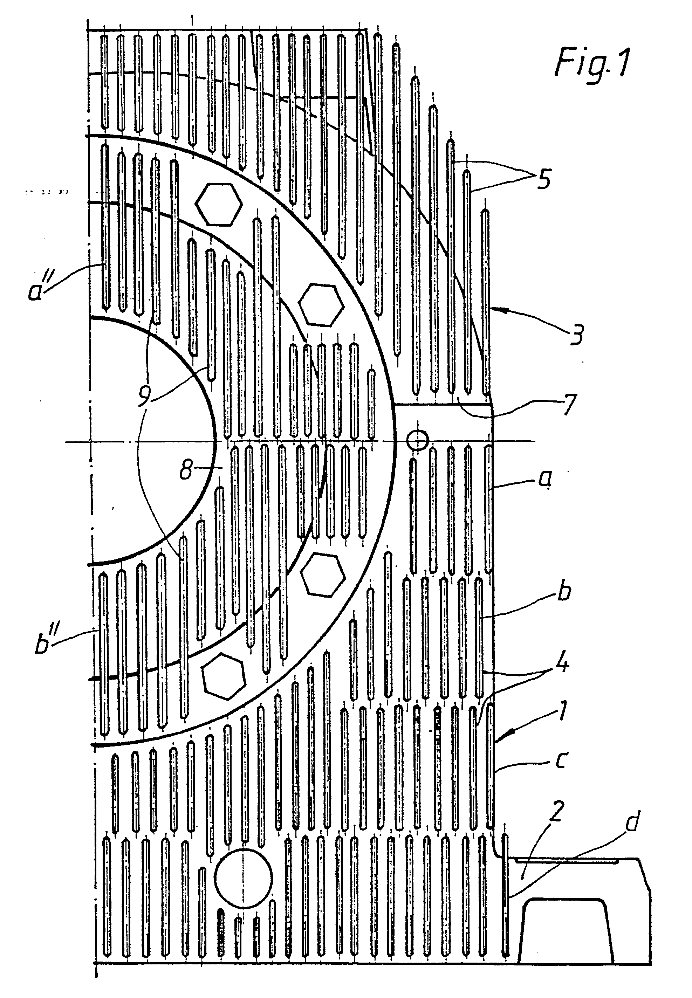

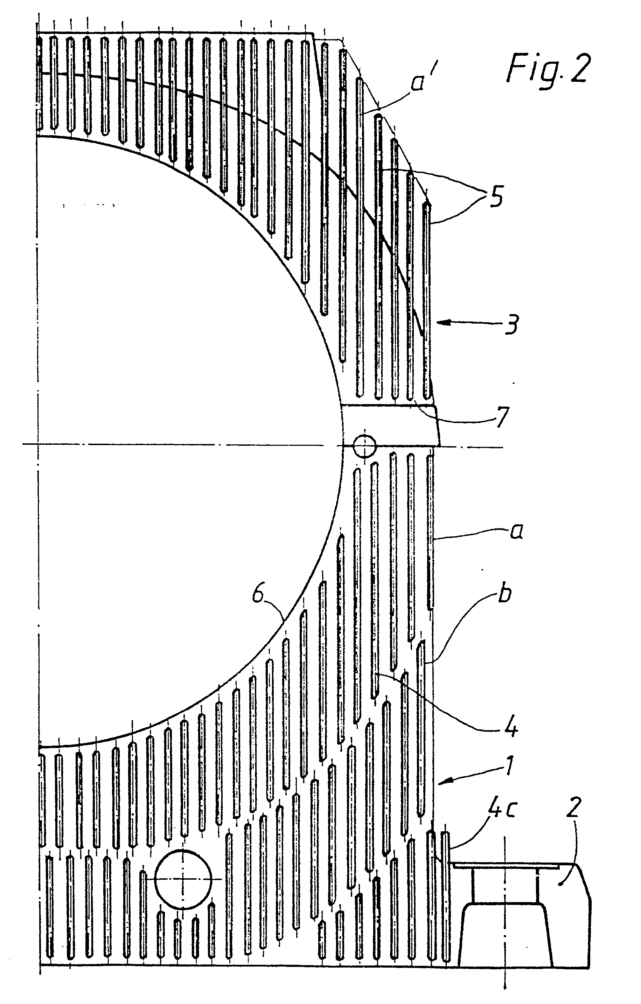

Die Gehäuseunterteilkühlrippen 4 sind im Ausführungsbeispiel in drei bzw. vier Rippenreihen a, b, c bzw. a, b, c, d übereinander angeordnet. Bei der Ausführungsform nach Fig. 1 verlaufen diese Rippenreihen a, b, c, d im auf gestellten Zustand des Stehgleitlagergehäuses horizontal. In der Ausführungsform nach Fig. 2 sind die Rippenreihen a, b, c kreisbogenförmig geführt. Man erkennt, daß die Rippenreihen die gleiche Rippenteilung aufweisen. Die Anordnung ist so getroffen, daß die Rippenreihen a, b, c bzw. a, b, c, d der Gehäuseunterteilkühlrippen 4 zu gestaffelten Rippenregistern zusammengefaßt sind, die ihrerseits um das halbe Teilungsmaß gegeneinander versetzt sind. In Kombination dazu sind im Ausführungsbeispiel die Gehäuseoberteilkühlrippen 5 in besonderer Weise in Rippenregister aufgeteilt. Aus der Fig. 3 entnimmt man, daß dazu die Gehäuseoberteilkühlrippen 5 an beiden Frontseiten ein frontseitiges Rippenregister a' und außerdem ein oberseitiges Rippenregister b' bilden. In der Fig. 3 links sind die Rippen des frontseitigen Rippenregisters a' in das Oberteil hineingeführt. In der Ausführungsform nach Fig. 3 rechts sind die Gehäuseoberteilkühlrippen 5 des oberseitigen Rippenregisters b' orthogonal zu den Gehäuseoberteilkühlrippen 5 des frontseitigen Rippenregisters a' verlaufend orientiert. Alle Rippenregister des Gehäuseoberteils 3 besitzen die gleiche Rippenteilung.

Angedeutet wurde in der Fig. 1 der Abschlußdeckel 8 vor der freiliegenden Wellendurchführung. Auch dieser Abschlußdeckel besitzt vertikale Abschluigdeckelkuhlrippen 9. Auch diese sind im Ausführungsbeispiel in horizontale Rippenreihen a'', b'' aufgeteilt und zu gestaffelten Rippenregistern zusammengefaßt sowie um das halbe Teilungsmaß gegeneinander versetzt.

Aus einer vergleichenden Betrachtung der Fig. 1 bis 3 entnimmt man, daß alle Rippenregister die gleiche Rippenteilung, die gleiche Rippenhöhe sowie die gleiche Rippendicke aufweisen. Das gilt sogar für unterschiedliche Baugrößen des dargestellten Stehgleitlagergehäuses, insbesondere für Wellendurchmesser zwischen 100 mm und 1000 mm. Das Teilungsmaß mag etwa 15 mm betragen, die Rippenhöhe liegt zwischen 20 und 25 mm, die Rippendicke bei etwa 4 mm.

## Patentansprüche

1. Gleitlagergehäuse für Stehgleitlager nach DIN 31 690, - mit
    Gehäuseunterteil (1),
    Gehäuseoberteil (2) und
    mit Kühlrippen (4, 5) an beiden Gehäuseteilen,
    wobei die Gehäuseunterteilkühlrippen (4) zumindest an einer Gehäusefrontseite und vertikal angeordnet sind, wobei die Gehäuseoberteilkühlrippen (5) frontseitig unter Aussparung der Wellendurchführung (6) sowie des Teilungsfugenbereiches (7) die an die Wellendurchführung bzw. an den Teilungsfugenbereich herangeführten Gehäuseunterteilkühlrippen fortsetzen sowie außerdem auf der Oberseite des Gehäuseoberteils angeordnet sind, dadurch gekennzeichnet, daß die Gehäuseunterteilkühlrippen (4) in zumindest zwei horizontalen oder kreisbogenförmigen Rippenreihen (a, b, ... ) übereinander angeordnet sind, die die gleiche Rippenteilung aufweisen, und daß die Rippenreihen (a, b, ... ) der Gehäuseunterteilkühlrippen (4) als gestaffelte Rippenregister gegeneinander versetzt sind.

2. Gleitlagergehäuse nach Anspruch 1, dadurch gekennzeichnet, daß in Kombination dazu die Gehäuseoberteilkühlrippen (5) in Rippenregister (a', b') aufgeteilt sind.

3. Gleitlagergehäuse nach Anspruch 2, dadurch gekennzeichnet, daß die Gehäuseoberteilkühlrippen (5) an zumindest einer Frontseite ein frontseitiges Rippenregister (a') und außerdem ein oberseitiges Rippenregister (b') aus Rippenreihen bilden, die beide die gleiche Rippenteilung aufweisen, und daß die Gehäuseoberteilkühlrippen (5) des oberseitigen Rippenregisters (b') orthogonal zu den Gehäuseoberteilkühlrippen (5) des frontseitigen Rippenregisters (a') verlaufen.

4. Gleitlagergehäuse nach Anspruch 1 in der Ausführungsform mit Abschlußdeckel vor der freiliegenden, frontseitigen Wellendurchführung, dadurch gekennzeichnet, daß in Kombination dazu der Abschlußdeckel (8) Abschlußdeckelkühlrippen (9) aufweist, die in horizontale Rippenreihen (a'', b'') aufgeteilt und zu gestaffelten Rippenregistern übereinander angeordnet sowie um das halbe Teilungsmaß gegeneinander versetzt sein können.

5. Gleitlagergehäuse nach einem der Ansprüche 1 bis 4 in der Ausführungsform für Wellendurchmesser von 80 bis 1000 mm, dadurch gekennzeichnet, daß alle Rippenregister (a, b, c. .. ) die gleiche Rippenteilung, die gleiche Rippenhöhe sowie die gleiche Rippendicke aufweisen, und zwar mit einem Teilungsmaß von etwa 15 mm, einer Rippenhöhe zwischen 15 und 50 mm und einer Rippendicke von etwa 4 mm.

## Claims

1. A friction bearing housing for a stationary friction bearing in accordance with DIN 31 690 comprising a housing lower portion (1), and a housing upper portion (3), having cooling ribs (4, 5) on both portions of the housing, in which the housing lower portion cooling ribs (4) are arranged vertically at least on one housing front surface, and in which the housing upper portion cooling ribs (5) on the front surface continue the housing lower portion cooling ribs that lead to an opening (6) for the passage of the shaft and for the separation joint area (7) and in addition cooling ribs are located on the upper surface of the housing upper portion, characterised in that the housing lower portion cooling ribs (4) are located one above the other in at least two horizontal or arc-shaped rows of ribs (a, b ...) possessing the same rib spacing, and that the rows (a, b, ...) of housing lower portion cooling ribs (4) are mutually displaced with staggered rib registration.

2. A friction bearing housing according to Claim 1, characterised in that in combination therewith the housing upper portion cooling ribs (5) are distributed with rib registration (a', b').

3. A friction bearing housing according to Claim 2, characterised in that the housing upper portion cooling ribs (5) form on at least one front surface a front surface rib registration (a') and also an upper surface rib registration (b') of rows of ribs, both of which possess the same rib spacing, and that the housing upper portion cooling ribs (5) of the upper surface rib registration (b') extend orthogonally to the housing upper portion cooling ribs (5) of the front surface rib registration (a').

4. A friction bearing housing according to Claim 1, in the form of construction with a cover plate before the exposed shaft opening, characterised in that in combination therewith the cover plate (8) possesses cover plate cooling ribs (9) that are distributed as horizontal rows of ribs (a'', b''), can be located one above the other with staggered rib registration, and can be mutually displaced by half the rib spacing distance.

5. A friction hearing housing according to one of Claims 1 to 4 in the form of construction for a shaft diameter of 80 to 1000 mm, characterised in that all the rib registrations (a, b, c, ...) possess the same rib spacing, rib height and rib thickness, namely a spacing of about 15 mm, a rib height between 15 and 50 mm, and a rib thickness of about 4 mm.

## Revendications

1. Logement de palier lisse à chapeau selon DIN 31 690, comportant
- une partie inférieure de logement (1),
- une partie supérieure de logement (2), et
- des nervures de refroidissement (4, 5) ménagées sur les deux parties du logement, les nervures de refroidissement (4) de la partie inférieure du logement étant prévues au moins sur une face avant du logement en étant disposées verticalement, et les nervures de refroidissement (5) de la partie supérieure du logement prolongeant sur la face avant, tout en laissant subsister le passage d'arbre (6) ainsi que la zone (7) du joint de séparation, les nervures de refroidissement de la partie inférieure du logement qui s'étendent jusqu'au passage d'arbre ou jusqu'à la zone du joint de séparation, et étant disposées en outre sur la face supérieure de la partie supérieure du logement, caractérisé en ce que les nervures de refroidissement (4) de la partie inférieure du logement sont superposées selon au moins deux rangées (a, b,...) de nervures horizontales ou en forme d'arcs de cercle et qui comportent le même pas de répartition des nervures, et que les rangées (a, b,...) des nervures de refroidissement (4) de la partie inférieure du logement sont décalées les unes par rapport aux autres sous la forme d'ensembles échelonnés de nervures.

2. Logement de palier lisse selon la revendication 1, caractérisé en ce que, en combinaison avec ce qui précède, les nervures de refroidissement (5) de la partie supérieure du logement sont réparties dans des ensembles de nervures (a', b').

3. Logement de palier lisse selon la revendication 2, caractérisé en ce que les nervures de refroidissement (5) de la partie supérieure du logement forment, sur au moins une face frontale, un ensemble de nervures (a') situé sur la face frontale et, ailleurs, un ensemble de nervures (b') situé sur la face supérieure, ces deux ensembles de nervures possédant le même pas de répartition des nervures, et que les nervures de refroidissement (5) de la partie supérieure du logement, qui font partie de l'ensemble de nervures (b') situé sur la face supérieure, sont perpendiculaires aux nervures de refroidissement (5) de la partie supérieure du logement, qui appartiennent à l'ensemble de nervures (a') situé sur la face frontale.

4. Logement de palier lisse selon la revendication 1, dans la forme de réalisation comportant un capot de fermeture situé devant le passage d'arbre dégagé situé du côté frontal, caractérisé par le fait qu'en combinaison avec ce qui précède, le capot de fermeture (8) comporte des nervures de refroidissement (9) qui se répartissent en rangées horizontales (a", b") de nervures et sont disposées les unes au-dessus des autres sous la forme d'ensembles étagés de nervures et peuvent être décalées les unes par rapport aux autres d'une distance égale au demi-pas de répartition.

5. Logement de palier lisse selon l'une des revendication 1 à 4, dans la forme de réalisation pour un diamètre d'arbre de 80 à 1000 mm, caractérisé en ce que tous les ensembles de nervures (a, b, c, ...) possèdent le même pas de répartition des nervures, la même hauteur des nervures et la même épaisseur des nervures, et ce avec un pas de répartition d'environ 15 mm, une hauteur des nervures comprise entre 15 et 50 mm et une épaisseur des nervures égale à environ 4 mm.

Fig. 1

Fig. 2

Fig.3